# EUROPEAN PATENT APPLICATION

(11) **EP 4 379 930 A1**
(43) Date of publication of application: **05.06.2024**
(21) Application number: 22918333.0
(22) Date of filing: 07.12.2022
(51) Int. Cl.: H01M 50/244, H01M 50/249, H01M 50/262

(54) **FIXING SUPPORT, BATTERY, AND ELECTRICAL DEVICE**

(30) Priority: 04.01.2022 CN 202220007417 U
(71) Applicant: Contemporary Amperex Technology Co., Limited, Ningde, Fujian 352100 (CN)
(72) Inventor: ZHU, Yanlin, Ningde, Fujian 352100 (CN); XIE, Renxin, Ningde, Fujian 352100 (CN)
(74) Representative: Gong, Jinping
(86) International application number: PCT/CN2022/137243
(87) International publication number: WO 2023/130882

(57) **Abstract**

This application relates to a fixing bracket, a battery, and an electrical device, in which a fixing piece is inserted into a clearance between a battery module and a lateral face of a box, and a wiring harness or a busbar is fixed in an accommodation channel of a buckle, thereby fixing the wiring harness and the busbar without occupying a storage space in the box, and further downsizing the battery and saving space.

## Description

### CROSS-REFERENCE TO RELATED APPLICATIONS

This application claims priority to Chinese Patent Application No. 202220007417.0, filed on January 4, 2022 and entitled "FIXING BRACKET, BATTERY, AND ELECTRICAL DEVICE", which is incorporated herein by reference in its entirety.

### TECHNICAL FIELD

This application relates to the field of battery technology, and in particular, to a fixing bracket, a battery, and an electrical device.

### BACKGROUND

A battery typically includes a box and a battery module placed in the box. The battery module includes a plurality of battery cells. Therefore, during assembling of the battery module, a busbar and a large number of wiring harnesses are formed. The busbar and the wiring harnesses need to be fixed and stowed to make the structure of the battery module in the box clearer and neater to facilitate subsequent maintenance and improve safety performance of the battery.

However, a higher energy density and a smaller size of a power battery are required currently in the market. Therefore, the space inside the box is smaller, and the space available for fixing and stowing the busbar and wiring harnesses is smaller.

### SUMMARY

In view of the current problem of a small wiring space in the box, a fixing bracket, a battery, and an electrical device are hereby disclosed to reduce the required space in the box in a process of fixing a wiring harness and a busbar, and reduce the size of the battery.

According to a first aspect, this application provides a fixing bracket, configured to fix a wiring harness of a battery module. The battery module is placed in a box. The fixing bracket includes:
a fixing piece, where the fixing piece is able to be inserted into a clearance between the battery module and a lateral face of the box along a length direction of the fixing piece, and one end of the fixing piece is connected to a bottom of the box; and
a buckle, where the buckle is connected to another end of the fixing piece, and includes a first snap portion and a second snap portion that are snap-fitted to each other, and an accommodation channel configured to accommodate the wiring harness is formed between the first snap portion and the second snap portion.

In the technical solution of this embodiment of this application, the fixing piece is fixed in the clearance between the battery module and the lateral face of the box, and the busbar and the wiring harness are fixed in the accommodation channel by the buckle, thereby fixing the busbar and the wiring harness into the clearance between the battery module and the box. In this way, the busbar and the wiring harness are fixed, and the internal space of the box is saved at the same time, thereby making the battery structure more compact and increasing the energy density of the battery.

In some embodiments, the first snap portion includes a first snap-hook, and the second snap portion includes a second snap-hook disposed opposite to the first snap-hook. The first snap-hook and the second snap-hook are snap-fitted to each other.

In the technical solution of this embodiment of this application, when the busbar or the wiring harness is fixed in the accommodation channel, the first snap-hook and the second snap-hook are snap-fitted to each other. In this way, the accommodation channel forms a closed channel, and the busbar or wiring harness located in the accommodation channel is prevented from falling out, thereby ensuring that the busbar and the wiring harness are fixed stably.

In some embodiments, the fixing piece includes a plug-in end and a connecting end. The connecting end is connected to the buckle. A thickness of the plug-in end decreases stepwise from one end to another end, the one end being an end at which the fixing piece is connected to the buckle.

In the technical solution of this embodiment of this application, the plug-in end can be inserted more smoothly into glue at the bottom of the box, so that the fixing bracket is more firmly fixed between the battery module and the box.

In some embodiments, the plug-in end extends outward along a direction perpendicular to the length direction of the fixing piece to form a bend portion, and the bend portion is press-fitted into a clearance between the battery module and the bottom of the box.

In the technical solution of this embodiment of this application, the bend portion enables the fixing bracket to be arranged in the clearance between the battery module and the box more stably, thereby improving the stability of the busbar and the wiring harness.

In some embodiments, the bend portion and the buckle are located on two opposite sides of the fixing piece respectively along the direction perpendicular to the length direction of the fixing piece, and the buckle is located in the clearance between the battery module and the lateral face of the box when the bend portion is press-fitted into the clearance between the battery module and the bottom of the box.

The technical solution of this embodiment of this application enables the fixing bracket to be applicable to batteries with a relatively large clearance between the battery module and the lateral face of the box, thereby improving the applicability of the fixing bracket.

In some embodiments, the bend portion and the buckle are located on a same side of the fixing piece along the direction perpendicular to the length direction of the fixing piece. The buckle is located at a top of the battery module when the bend portion is press-fitted into the clearance between the battery module and the bottom of the box.

The technical solution of this embodiment of this application enables the fixing bracket to be applicable to batteries with a relatively small clearance between the battery module and the lateral face of the box but with a relatively large clearance at the top, thereby improving the applicability of the fixing bracket.

In some embodiments, the fixing piece further includes a telescopic portion located between the plug-in end and the connecting end. The plug-in end is connected to the bottom of the box. The telescopic portion is telescopically disposed along the length direction of the fixing piece to adjust a distance between the plug-in end and the connecting end.

In the technical solution of this embodiment of this application, the length of the fixing piece is adjusted by the telescopic portion, so that the fixing piece can match the battery modules of different heights, thereby improving the applicability of the fixing bracket.

In some embodiments, an opening direction of the accommodation channel is perpendicular to the length direction of the fixing piece.

The technical solution of this embodiment of this application utilizes the clearance between the battery module and the lateral face of the box more sufficiently, and is conducive to stowing more busbars and wiring harnesses.

According to a second aspect, this application provides a battery, including a box, a battery module, and the fixing bracket disclosed above. The battery module is located in the box and includes a busbar and a wiring harness. The fixing bracket is disposed in a clearance between the battery module and the box to fix the busbar and the wiring harness.

According to a third aspect, this application provides an electrical device, including an electrical main body and the battery disclosed above.

In the fixing bracket, the battery, and the electrical device described above, the fixing piece is inserted into the clearance between the battery module and the lateral face of the box, and the wiring harness or the busbar is fixed in an accommodation channel of a buckle, thereby fixing the wiring harness and the busbar without occupying a storage space in the box, and further downsizing the battery and saving space.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of embodiments, a person of ordinary skill in the art becomes clearly aware of various other advantages and benefits. The drawings are merely intended to illustrate the embodiments, but not to limit this application. In all the drawings, the same reference numeral represents the same component. In the drawings:
FIG. 1 is a schematic structural exploded view of a battery according to an embodiment of this application;
FIG. 2 is a schematic structural exploded view of a battery cell according to an embodiment of this application;
FIG. 3 is a schematic diagram of an overall structure of a fixing bracket according to an embodiment of this application;
FIG. 4 is a close-up view of a position A shown in FIG. 3;
FIG. 5 is a schematic structural diagram of a fixing bracket according to another embodiment of this application;
FIG. 6 is a schematic structural diagram of a fixing bracket according to another embodiment of this application;
FIG. 7 is a schematic assembling diagram of a fixing bracket and a battery module according to an embodiment of this application; and
FIG. 8 is a schematic assembling diagram of a fixing bracket and a battery module according to an embodiment of this application.

List of reference numerals: 100. battery; 10. box; 20. battery module; 30. fixing bracket; 11. first part; 12. second part; 21. battery cell; 31. fixing piece; 32. buckle; 211. end cap; 212. housing; 213. electrode assembly; 311. plug-in end; 312. connecting end; 313. telescopic portion; 321. first snap portion; 322. second snap portion; 323. accommodation channel; 3111. bend portion; 3211. first snap-hook; 3221. second snap-hook; 211a. electrode terminal.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

With the wide application of power batteries, the performance requirements on the power batteries are increasingly higher. Specifically, for higher durability and convenience, people require a higher energy density and a smaller size of the power batteries. On the basis of meeting such requirements, during manufacture of batteries, the storage space in a box of a battery is further reduced, the layout between structures in the box is more compact.

During manufacture of the battery, a battery cell is the most basic element of the battery. A plurality of battery cells may combine to form a battery module. The battery modules are arranged in specified order in the box to ultimately form the battery. In a process of arranging the battery modules, the busbar and the wiring harness outside the battery modules need to be fixed and stowed properly so that the layout of the battery modules in the box is clearer and more concise.

Currently, however, the busbars and wiring harnesses are usually fixed by a harness tie. One end of the harness tie is fixed to the box, and the other end of the harness tie is configured to fix the busbar and the wiring harness. The inventor hereof finds that when the busbar and the wiring harness are fixed by a harness tie, the harness tie takes up some internal space of the box, thereby not only reducing the overall energy density of the battery, but also increasing the overall weight of the battery.

In addition, the applicant finds that an output electrode is formed or other functional components are disposed outside the battery module, thereby leaving a clearance between the battery module and the box. Therefore, a specified fixing bracket structure may be designed to fix and stow the busbar and the wiring harness by utilizing the clearance between the battery module and the box. This arrangement occupies no internal storage space of the box, and reduces the overall weight of the battery.

Based on the above considerations, in order to solve the problem that the storage space inside the box is limited and unsuitable for fixing and stowing busbars and wiring harnesses, the inventor has designed a fixing bracket through in-depth research. The fixing bracket can be fixed in the box by means of a fixing piece that can be inserted into a clearance between the battery module and the box. In addition, the busbar and the wiring harness are fixed and stowed by means of a buckle, so that the overall structure of the battery is more compact and reasonable.

An embodiment of this application provides an electrical device powered by a battery. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

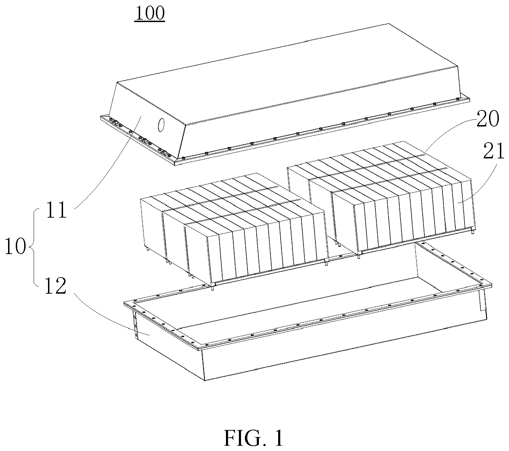

Referring to FIG. 1, FIG. 1 is an exploded view of a battery 100 according to some embodiments of this application. The battery 100 includes a box 10 and a battery module 20. The battery module 20 includes a plurality of battery cells 21, and is accommodated in the box 10. The box 10 is configured to provide an accommodation space for the battery module 20. The box 10 may assume various structures. In some embodiments, the box 10 may include a first part 11 and a second part 12. The first part 11 and the second part 12 fit and cover each other. The first part 11 and the second part 12 together define an accommodation space configured to accommodate the battery cell 21. The second part 12 may be a hollow structure opened at one end. The first part 11 may be a plate-like structure. The first part 11 fits on an opening side of the second part 12 so that the first part 11 and the second part 12 together define the accommodation space. Alternatively, both the first part 11 and the second part 12 may be hollow structures opened at one side. The opening side of the first part 11 fits the opening side of the second part 12. Definitely, the box 10 formed by the first part 11 and the second part 12 may be in various shapes, such as a cylinder or a cuboid.

In the battery 100, the battery module 20 may be formed by a plurality of battery cells 21 connected in series, parallel, or series-and-parallel pattern. The series-and-parallel pattern means a combination of series connection and parallel connection of the plurality of battery cells 21. The plurality of battery cells 21 may be directly connected in series, parallel, or series-and-parallel pattern, and then the whole of the plurality of battery cells 21 may be accommodated in the box 10. Definitely, the battery 100 may further include other structures. For example, the battery 100 may further include a busbar component. The busbar component is configured to implement electrical connection between the plurality of battery cells 21.

Each battery cell 21 may be, but is not limited to, a secondary battery or primary battery; or, may be a lithium-sulfur battery, a sodium-ion battery, or a magnesium-ion battery. The battery cell 21 may be in a shape such as a cylinder, a flat body, a cuboid, or other shapes.

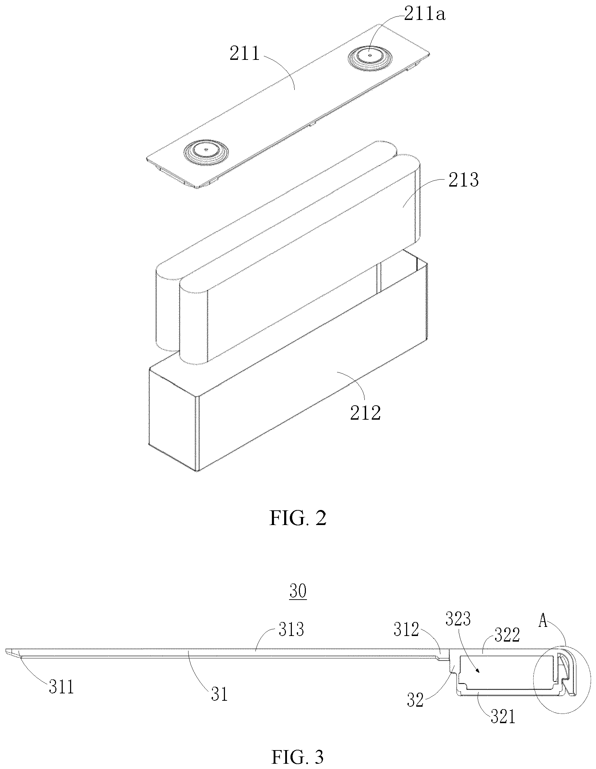

Referring to FIG. 2, FIG. 2 is a schematic structural exploded view of a battery cell 21 according to some embodiments of this application. The battery cell 21 is a minimum unit of a battery. As shown in FIG. 2, the battery cell 21 includes an end cap 211, a housing 212, an electrode assembly 213, and other functional components.

The end cap 211 is a component that fits and covers the opening of the housing 212 to isolate the internal environment of the battery cell 21 from the external environment. Not restrictively, the shape of the end cap 211 may be adapted to the shape of the housing 212 to fit the housing 212. Optionally, the end cap 211 may be made of a material of appropriate hardness and strength (such as aluminum alloy), so that the end cap 211 is not prone to deform when squeezed or impacted. In this way, the battery cell 21 achieves higher structural strength and higher safety performance. Functional components such as electrode terminals 211a may be disposed on the end cap 211. The electrode terminals 211a may be configured to be electrically connected to the electrode assembly 213 to output or input electrical energy of the battery cell 21. In some embodiments, a pressure relief mechanism configured to release an internal pressure when the internal pressure or temperature of the battery cell 21 reaches a threshold may be further disposed on the end cap 211. The end cap 211 may also be made of a variety of materials such as copper, iron, aluminum, stainless steel, aluminum alloy, or plastic, and the materials are not particularly limited herein. In some embodiments, an insulation piece may be further disposed on an inner side of the end cap 211. The insulation piece may be configured to isolate an electrically connected component in the housing 212 from the end cap 211 to reduce short-circuit risks. For example, the insulator may be plastic, rubber, or the like.

The housing 212 is a component configured to fit the end cap 211 to form an internal environment of the battery cell 21. The formed internal environment may be used to accommodate the electrode assembly 213, an electrolytic solution, and other components. The housing 212 and the end cap 211 may be stand-alone components. An opening may be made on the housing 212. At the opening, the end cap 211 fits with the opening to form the internal environment of the battery cell 21. Not restrictively, the end cap 211 and the housing 212 may be integrated instead. Specifically, the end cap 211 and the housing 212 may form a common connection interface before other components are put into the housing. Subsequently, when the interior of the housing 212 needs to be sealed, the end cap 211 is made to fit with the housing 212. The housing 212 may be in various shapes and sizes, such as a cuboid, cylinder, or hexagonal prism. Specifically, the shape of the housing 212 may be determined depending on the specific shape and size of the electrode assembly 213. The housing 212 may be made of a variety of materials such as copper, iron, aluminum, stainless steel, aluminum alloy, or plastic, without being particularly limited herein.

The electrode assembly 213 is a component that incurs electrochemical reactions in the battery cell 21. The housing 212 may contain one or more electrode assemblies 213. The electrode assembly 213 is primarily formed by winding or stacking a positive electrode plate and a negative electrode plate. A separator is generally disposed between the positive electrode plate and the negative electrode plate. The parts, coated with an active material, of the positive electrode plate and the negative electrode plate, constitute a body portion of the electrode assembly. The part, coated with no active material, of the positive electrode plate and the negative electrode plate separately, constitutes a tab. The positive tab and the negative tab may be located at one end of the body portion together or at two ends of the body portion respectively. In a charge-and-discharge process of the battery, the positive active material and the negative active material react with an electrolytic solution. The tabs are connected to electrode terminals to form a current circuit.

Referring to FIG. 3, an embodiment of this utility model provides a fixing bracket 30 configured to fix a wiring harness of a battery module 20. The battery module 20 is placed in the box 10. The fixing bracket 30 includes a fixing piece 31 and a buckle 32. The fixing piece 31 is able to be inserted into a clearance between the battery module 20 and a lateral face of the box 10 along a length direction of the fixing piece, and one end of the fixing piece is connected to a bottom of the box 10. The buckle 32 is connected to another end of the fixing piece 31, and includes a first snap portion 321 and a second snap portion 322 that are snap-fitted to each other. An accommodation channel 323 configured to accommodate the wiring harness is formed between the first snap portion 321 and the second snap portion 322.

Specifically, during manufacture of the battery, a layer of glue is injected into the bottom of the box 10 first, and then the battery module 20 is placed inside the box 10 and secured in the glue. In this process, a lateral clearance is formed between the battery module 20 and the sidewall of the box 10. The fixing piece 31 is inserted into the box 10 from top to bottom along the lateral clearance between the battery module 20 and the box 10, and an end of the fixing piece 31, which is back from the buckle 32, is inserted into the glue at the bottom of the box 10. In this way, the fixing bracket 30 is fixed into the clearance between the battery module 20 and the box 10.

Further, the busbar or wiring harness on the battery module 20 are passed through the accommodation channel 323, and the busbar or wiring harness is fixed into the accommodation channel 323 through the first snap portion 321 and the second snap portion 322, so as to fix the busbar or wiring harness into the clearance between the battery module 20 and the box 10 through the fixing bracket 30. In this way, the busbar and the wiring harness are fixed, and the storage space inside the box 10 is saved at the same time, thereby making the overall structure of the battery more compact.

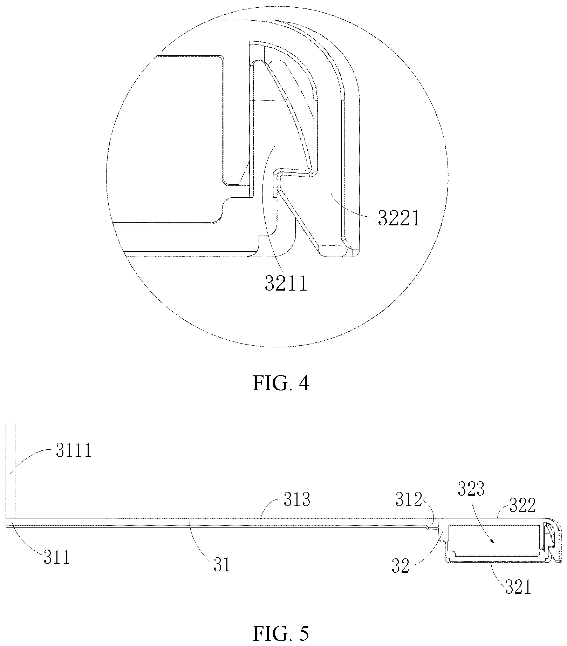

As shown in FIG. 4, in some embodiments, the first snap portion 321 includes a first snap-hook 3211, and the second snap portion 322 includes a second snap-hook 3221 disposed opposite to the first snap-hook 3211. The first snap-hook 3211 and the second snap-hook 3221 are snap-fitted to each other. When the busbar or the wiring harness is fixed in the accommodation channel 323, the first snap-hook 3211 and the second snap-hook 3221 are snap-fitted to each other. In this way, the accommodation channel 323 forms a closed channel, and the busbar or wiring harness located in the accommodation channel is prevented from falling out, thereby ensuring that the busbar and the wiring harness are fixed stably.

In some embodiments, the fixing piece 31 includes a plug-in end 311 and a connecting end 312. The connecting end 312 is connected to the buckle 32. The thickness of the plug-in end 311 decreases stepwise from one end to another end, the one end being an end at which the fixing piece 31 is connected to the buckle 32.

Specifically, the plug-in end 311 is constructed as a wedge-shaped structure. In this way, when the fixing piece 31 is inserted into the clearance between the battery module 20 and the sidewall of the box 10, the plug-in end 311 can be inserted more smoothly into the glue at the bottom of the box 10, so that the fixing bracket 30 is more firmly fixed between the battery module 20 and the box 10.

Referring to FIG. 5, in some embodiments, the plug-in end 311 extends outward along a direction perpendicular to the length direction of the fixing piece 31 to form a bend portion 3111. The bend portion 3111 is press-fitted into a clearance between the battery module 20 and the bottom of the box 10. To arrange the fixing bracket 30 in the clearance between the battery module 20 and the box 10 more stably, the bend portion 3111 is press-fitted to the bottom of the battery module 20. The bend portion 3111 is perpendicular to the fixing piece 31. Therefore, when the bend portion 3111 is press-fitted to the bottom of the battery module 20, the fixing piece 31 can be stably located in the clearance between the battery module 20 and the lateral face of the box 10.

In an embodiment, the bend portion 3111 and the buckle 32 are located on two opposite sides of the fixing piece 31 respectively along the direction perpendicular to the length direction of the fixing piece 31. The buckle 32 is located in the clearance between the battery module 20 and the lateral face of the box 10 when the bend portion 3111 is press-fitted into the clearance between the battery module 20 and the bottom of the box 10.

Specifically, for a battery with a relatively large clearance between the battery module 20 and the lateral face of the box 10, the buckle 32 may be arranged in the clearance between the battery module 20 and the lateral face of the box 10. In this way, when the bend portion 3111 is press-fitted into the clearance between the battery module 20 and the bottom of the box 10, the buckle 32 can be accommodated in the clearance between the battery module 20 and the lateral face of the box 10, and the busbar and the wiring harness are fixed into the clearance between the battery module 20 and the lateral face of the box 10.

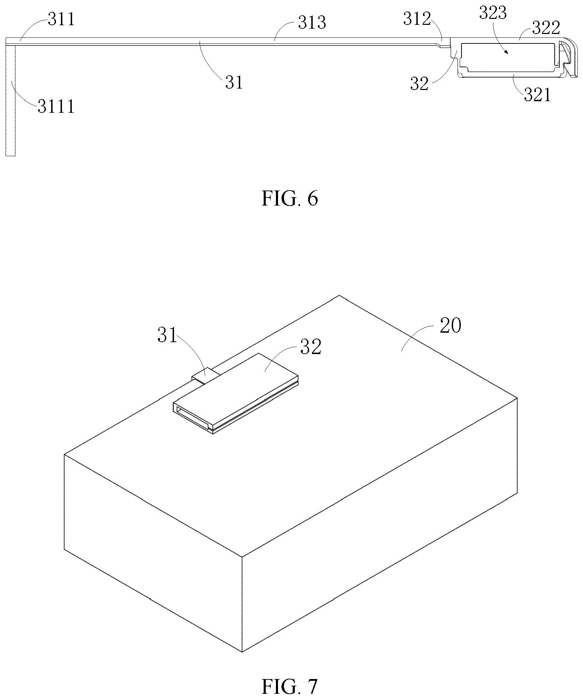

Referring to FIG. 6, in another embodiment, the bend portion 3111 and the buckle 32 are located on the same side of the fixing piece 31 along the direction perpendicular to the length direction of the fixing piece 31. The buckle 32 is located at the top of the battery module 20 when the bend portion 3111 is press-fitted into the clearance between the battery module 20 and the bottom of the box 10.

Inside batteries of different sizes, the layout of the battery module 20 differs. Therefore, for a battery with a relatively small clearance between the battery module 20 and the lateral face of the box 10 but a relatively large top clearance, the buckle 32 may be arranged at the top of the battery module 20 and configured to fix the busbar and the wiring harness.

Specifically, the bend portion 3111 is press-fitted into the clearance between the battery module 20 and the bottom of the box 10, the fixing piece 31 runs through the whole clearance between the battery module 20 and the lateral face of the box 10, and the buckle 32 is positioned at the top of the battery module 20. In this way, the busbar and the wiring harness can be fixed into the clearance between the battery module 20 and the top of the box 10.

Still referring to FIG. 3, in some embodiments, the fixing piece 31 further includes a telescopic portion 313 located between the plug-in end 311 and the connecting end 312. The telescopic portion 313 is telescopically disposed along the length direction of the fixing piece 31 to adjust the distance between the plug-in end 311 and the connecting end 312.

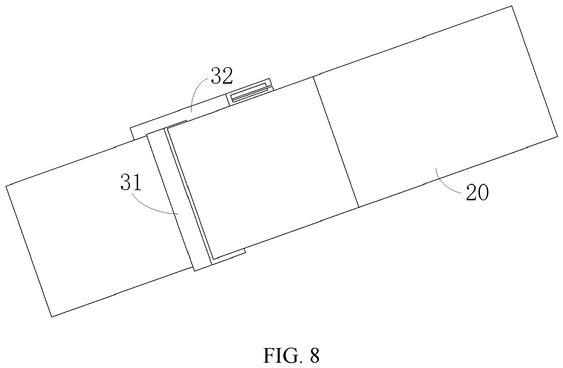

Inside batteries of different sizes, the height of the battery module 20 in the box 10 differs. Therefore, as shown in FIG. 7 and FIG. 8, in order to make the fixing bracket 30 applicable to battery modules 20 of different heights, a telescopic portion 313 is disposed between the plug-in end 311 and the connecting end 312. In this way, the length of the fixing piece 31 is adjustable based on the height of the battery module 20, and the fixing piece can match the battery modules 20 of different heights.

Specifically, in this embodiment, the telescopic portion 313 may be a corrugated pipe structure to facilitate elongation and shortening of the fixing piece 31. Understandably, the telescopic portion 313 may be replaced by another similar structure, such as a spring structure. The use of a similar replacement structure still falls within the scope of protection of this application, and details of the replacement is omitted herein.

In some embodiments, an opening direction of the accommodation channel 323 is perpendicular to the length direction of the fixing piece 31. Specifically, when the fixing piece 31 is inserted top-down into the clearance between the battery module 20 and the sidewall of the box 10, the busbar and the wiring harness can be horizontally and circumferentially put into the clearance between the battery module 20 and the lateral face of the box 10 along the opening direction of the accommodation channel 323. In this way, this application can utilize the clearance between the battery module 20 and the lateral face of the box 10 more sufficiently, and is conducive to stowing more busbars and wiring harnesses.

Based on the same conception as the fixing bracket 30, this application provides a battery 100 including a box 10, a battery module 20, and the fixing bracket 30. The battery module 20 is located in the box 10 and includes a busbar and a wiring harness. The fixing bracket 30 is disposed in the clearance between the battery module 20 and the box 10 to fix the busbar and the wiring harness.

Based on the same conception as the battery 100, this application provides an electrical device including an electrical main body and the battery 100.

When the technical solution of this application is specifically put into use, the plug-in end 311 of the fixing piece 31 is inserted into the clearance between the battery module 20 and the lateral face of the box 10 first, so that the plug-in end 311 is inserted into the glue at the bottom of the box 10, or so that the bend portion 3111 is press-fitted into the clearance between the battery module 20 and the bottom of the box 10, thereby improving the stability of the fixing bracket 30.

To fix the busbar and the wiring harness for a battery with a relatively large clearance between the battery module 20 and the lateral face of the box 10, the buckle 32 is positioned into the clearance between the battery module 20 and the lateral face of the box 10, and the busbar and the wiring harness are fixed into the clearance between the battery module 20 and the lateral face of the box 10.

To fix the busbar and the wiring harness for a battery with a relatively small clearance between the battery module 20 and the lateral face of the box 10 but a relatively large top clearance, the buckle 32 may be arranged at the top of the battery module 20, and the busbar and the wiring harness are fixed into the clearance between the battery module 20 and the top of the box 10.

In addition, to fix the busbar and the wiring harness for battery modules 20 of different heights, the length of the telescopic portion 313 may be adjusted to adjust the length of the fixing piece 31, make the fixing bracket 30 better match the batteries of different sizes, and improve the applicability of the fixing bracket 30.

The fixing bracket 30, the battery 100, and the electrical device in the above embodiments possess at least the following advantages:
1. The fixing piece 31 can match the clearance between the battery module 20 and the lateral face of the box 10, and the busbar and the wiring harness are fixed into the clearance between the battery module 20 and the lateral face or top of the box 10, without occupying additional storage space inside the box 10, thereby making the internal structure of the battery more compact and improving the energy density of the battery;
2. The bend portion 3111 can further improve the stability of the fixing bracket 30 in the clearance between the battery module 20 and the box 10, thereby improving the stability of the fixed busbar and harness, and improving the safety performance of the battery; and
3. The telescopic portion 313 can flexibly control the length of the fixing piece 31, and make the fixing piece match various battery modules 20 of different heights, thereby improving the degree of fit between the fixing bracket 30 and the battery module 20, and improving the applicability of the fixing bracket 30.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A fixing bracket, configured to fix a wiring harness of a battery module, wherein the battery module is placed in a box, and the fixing bracket comprises:
a fixing piece, wherein the fixing piece is able to be inserted into a clearance between the battery module and a lateral face of the box along a length direction of the fixing piece, and one end of the fixing piece is connected to a bottom of the box; and
a buckle, wherein the buckle is connected to another end of the fixing piece, and comprises a first snap portion and a second snap portion that are snap-fitted to each other, and an accommodation channel configured to accommodate the wiring harness is formed between the first snap portion and the second snap portion.

2. The fixing bracket according to claim 1, wherein the first snap portion comprises a first snap-hook, the second snap portion comprises a second snap-hook disposed opposite to the first snap-hook, and the first snap-hook and the second snap-hook are snap-fitted to each other.

3. The fixing bracket according to claim 1 or 2, wherein the fixing piece comprises a plug-in end and a connecting end, the connecting end is connected to the buckle, and a thickness of the plug-in end decreases stepwise from one end to another end, the one end being an end at which the fixing piece is connected to the buckle.

4. The fixing bracket according to claim 3, wherein the plug-in end extends outward along a direction perpendicular to the length direction of the fixing piece to form a bend portion, and the bend portion is press-fitted into a clearance between the battery module and the bottom of the box.

5. The fixing bracket according to claim 4, wherein the bend portion and the buckle are located on two opposite sides of the fixing piece respectively along the direction perpendicular to the length direction of the fixing piece, and the buckle is located in the clearance between the battery module and the lateral face of the box when the bend portion is press-fitted into the clearance between the battery module and the bottom of the box.

6. The fixing bracket according to claim 4, wherein the bend portion and the buckle are located on a same side of the fixing piece along the direction perpendicular to the length direction of the fixing piece, and the buckle is located at a top of the battery module when the bend portion is press-fitted into the clearance between the battery module and the bottom of the box.

7. The fixing bracket according to any one of claims 3 to 6, wherein the fixing piece further comprises a telescopic portion located between the plug-in end and the connecting end, the plug-in end is connected to the bottom of the box, and the telescopic portion is telescopically disposed along the length direction of the fixing piece to adjust a distance between the plug-in end and the connecting end.

8. The fixing bracket according to any one of claims 1 to 7, wherein an opening direction of the accommodation channel is perpendicular to the length direction of the fixing piece.

9. A battery, comprising a box, a battery module, and the fixing bracket according to any one of claims 1 to 8, wherein the battery module is located in the box and comprises a busbar and a wiring harness, and the fixing bracket is disposed in a clearance between the battery module and the box to fix the busbar and the wiring harness.

10. An electrical device, comprising an electrical main body and the battery according to claim 9.
